# EUROPÄISCHE PATENTSCHRIFT

(11) **EP 0 481 514 B1**
(45) Veröffentlichungstag und Bekanntmachung des Hinweises auf die Patenterteilung: **19.01.1994**
(21) Anmeldenummer: 91117832.5
(22) Anmeldetag: 18.10.1991
(51) Int. Cl.: F16B 37/14, B60R 9/058

(54) **Verschlussmutter für Befestigungsschrauben zur Befestigung von insbesondere Dachgepäckträgern**
Closure nut for fixing bolts mainly for roof racks
Ecrou de fermeture pour boulons de fixation en particulier pour galeries

(30) Priorität: 18.10.1990 DE 9014460 U
(43) Veröffentlichungstag der Anmeldung: 22.04.1992
(73) Patentinhaber: Tittel, Eberhard, 88287 Grünkraut (DE)
(72) Erfinder: Tittel, Eberhard, 88287 Grünkraut (DE)
(74) Vertreter: Schmidt-Evers, Jürgen, Dipl.-Ing.

(56) Entgegenhaltungen:
- EP-A- 0 110 035
- WO-A-89/04776
- DE-U- 9 014 460
- US-A- 1 931 899

## Beschreibung

Die Erfindung betrifft eine zur Befestigung von insbesondere Dachgepäckträgern und dgl. vorgesehene Verschlußmutter für bzw. einen Schraubenkopf von Befestigungsschrauben nach dem Oberbegriff des Anspruches 1.

Vorzugsweise ist der Deckel als Flachdeckel ausgebildet, der zweckmäßigerweise quer zur Axialrichtung der Durchgangsöffnung radial die Halterung hinein- bzw. aus ihr herausschiebbar ist.

Die Verschiebbarkeit des Deckels kann durch Ausbildung einer eine axiale Angriffsfläche aufweisende Griffvertiefung vorzugsweise in Form einer durchgehenden Öffnung, erleichtert werden.

Vorteilhafterweise umfaßt die Halterung eine Klemmhalterung zum Festlegen des Deckels in der Deckelebene. Außerdem kann die Halterung eine Formschlußhalterung zum Festlegen des Deckels quer zur Deckelebene umfassen.

Günstig ist eine Klemmhalterung, welche wenigstens ein elastisch bewegbares Klemmelement mit einer Klemmfläche zum kraftschlüssigen Eingriff mit einer Gegenfläche am Deckelrand umfaßt. Vorzugsweise ist das Klemmelement zum Festlegen des Deckels in lediglich einer Richtung ausgebildet, wobei ein Anschlag an der Verschlußmutter bzw. dem Schraubenkopf zum Festlegen des Deckels in der entgegengesetzten Richtung vorgesehen ist. Dabei können das Klemmelement und der Anschlag an einer Randleiste der Verschlußmutter bzw. des Schraubenkopfes ausgebildet sein.

Gemäß einer Weiterbildung der Erfindung weisen der Deckel und die Verschlußmutter bzw. der Schraubenkopf einen im wesentlichen kreisrunden Querschnitt auf, wobei die Randleiste sich entlang einem Kreisbogen mit einem Zentriewinkel von 180° + 2 β erstreckt und die beiden freien Randleisten-Endbereiche, deren jeweilige Bogenlänge zum Zentriewinkel β gehören, je ein Klemmelement darstellen. Dabei kann der Zentriewinkel β 10 bis 35°, vorzugsweise etwa 20°, betragen.

Um ein Verdrehen des Deckels relativ zur Verschlußmutter bzw. zum Schraubenkopf zu verhindern, ist sein dem randleistenfreien Bereich der Verschlußmutter bzw. des Schraubenkopfes zugeordnete Teil im Bereich der freien Enden der Randleiste vorteilhaft mit geradlinigem oder leicht konkav gekrümmten Verlauf ausgebildet.

Als der am nächsten kommende Stand der Technik ist
EP-A-0 110 035
zu werten. Bei dieser bekannten Ausgestaltung ist die Steckfassung für den Deckel zum einen radial innen von den Durchgangslöchern angeordnet und zum anderen axial zugänglich.

Bei einer aus US 1 931 899 bekannten Befestigung für eine Scheibe an einem Schraubenkopf ist in der Scheibe eine unterseitige Ausnehmung mit einer Hinterschneidung für den Schraubenkopf vorhanden, in die letzter durch axiales Aufstecken und radiales Verschieben der Scheibe einführbar ist.

Der Erfindung liegt die Aufgabe zugrunde, ein Schraubelement der im Oberbegriff des neuen Anspruchs 1 beschriebenen Art so auszugestalten, daß bei Gewährleistung einer stabilen Befestigung des Schraubenkopfes am Schraubenschaft oder der Möglichkeit, das Schraubelement als Verschlußmutter auszubilden, der Deckel leicht in die Halterung eingesetzt und wieder entfernt werden kann

Diese Aufgabe wird durch die Merkmale des Anspruchs 1 gelöst.

Bei der erfindungsgemäßen Ausgestaltung ist zum einen die Halterung in einem Bereich des Schraubelements angeordnet, der sich - radial gesehen. - neben, und zwar außen neben dem oder den Durchgangslöchern befindet. Hierdurch wird es zum einen ermöglicht, bei Gewährleistung einer kleinen Bauweise das Schraubelement als Mutter auszubilden. Bei einer Ausbildung als Schraubenkopf kann dessen Übergangsbereich zum Schraubenschaft stabiler ausgeführt werden. In beiden Fällen ist eine leichte Handhabung gewährleistet.

Zur Erzielung einer ausreichenden elastischen Klemmwirkung der Klemmhalterung sind die Randleiste und/oder die Verschlußmutter bzw. der Schraubkopf vorzugsweise aus Kunststoff ausgebildet.

Vorteilhafterweise umfaßt die Formschlußhalterung eine Feder/Nutanordnung, die zumindest teilweise umlaufend an der Randleiste und am Deckelrand ausgebildet ist.

Gemäß einer Weiterbildung der Erfindung ist die Randleiste durch einen nutartigen Einschnitt in zwei Randleistenabschnitte etwa gleicher Länge geteilt. Durch diesen nutartigen Einschnitt hindurch ist eine axiale Angriffsfläche des Deckels, d.h. der Deckelrand, zur Ausübung einer in Öffnungsrichtung wirkenden Kraft zugänglich.

Nachstehend ist die Erfindung anhand eines bevorzugten Ausführungsbeispiels unter Bezugnahme auf die Zeichnung näher beschrieben. Es zeigen:
Figur 1 einen Axialschnitt einer Befestigungsschraube, die zur Befestigung eines Dachgepäckträgers an einem Fahrzeugdach vorgesehen und mit einem erfindungsgemäßen Schraubenkopf einschließlich einer Halterung zur Aufnahme eines Deckels ausgebildet ist,
Figur 2 eine Draufsicht des Schraubenkopfes nach Figur 1,
Figur 3 eine Draufsicht des Deckels gemäß einem ersten Ausführungsbeispiel zur Aufnahme in die Halterung des Schraubenkopfes nach Figur 1 und,
Figur 4 eine Seitenansicht des Deckels gemäß einem zweiten Ausführungsbeispiel.

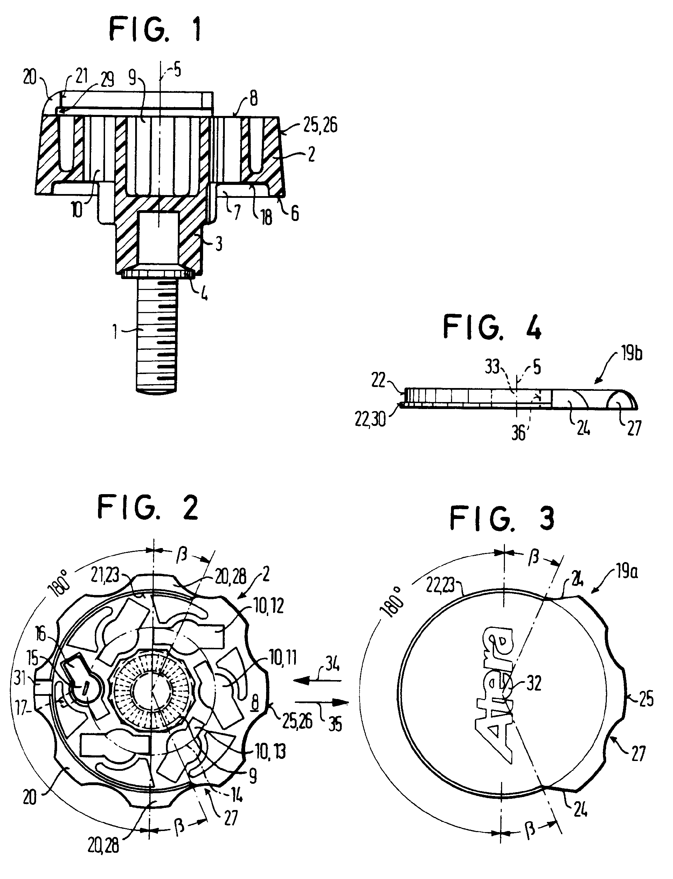

Befestigungsschrauben nach Figur 1 bestehen aus einem Schraubenbolzen 1 und einem Schraubenkopf 2. Sie dienen beispielsweise dazu, die Dachrinne eines Kraftfahrzeuges untergreifende Befestigungsklauen an in der Dachrinne abgestützten Stützfüßen eines Dachgepäckträgers zu verspannen und letzteren auf diese Weise am Kraftfahrzeug zu befestigen. Die Befestigungsschraube wird dabei mit ihrem Schraubenbolzen 1 soweit in eine Gewindebohrung im jeweiligen Stützfuß eingeschraubt, bis der Schraubenkopf 2 an der zugehörigen Befestigungsklaue, diese mit dem Stützfuß verspannend, anliegt. In einer alternativen Ausführung kann der Schraubenbolzen am Stützfuß befestigt sein und anstelle des Schraubenkopfes eine Verschlußmutter verwendet werden, die soweit auf den Schraubenbolzen aufgeschraubt wird, bis sie an der Befestigungsklaue, diese mit dem Stützfuß verspannend, anliegt.

Der im Querschnitt (Radialschnitt) kreisrunde Schraubenkopf 2 aus Kunststoff weist einen zentrischen Ansatz 3 auf, in den der metallene Schraubenbolzen 1 eingegossen ist. Ein kreisrunder Flansch 4 des Schraubenbolzens 1 schließt das freie Ende des Ansatzes 3 ab und dient als radial verlaufende Rillen aufweisende Anlagefläche der Befestigungsschraube an der jeweiligen Befestigungsklaue. Der Schraubenbolzen 1 und der Schraubenkopf 2 besitzen eine gemeinsame Längsmittelachse 5. In der dem freien Ende des Schraubenbolzens 1 zugewandten Seite bzw. Oberfläche 6 des Schraubenkopfes 2 ist eine koaxial zur Längsmittelachse 5 ringförmig umlaufende Nut 7 und in der gegenüberliegenden Seite bzw. Oberfläche 8 eine zentrische Vertiefung 9 ausgebildet. Im Schraubenkopf 2 sind weiterhin mehrere in die ringförmig umlaufende Nut 7 einerseits und an der gegenüberliegenden Seite bzw. Oberfläche 8 andererseits ausmündende Durchgangsöffnungen 10 bestehend aus je einem zylindrischen Durchgangsabschnitt 11 und je zwei diametralen Durchgangsabschnitten 12,13 rechteckigen Querschnitts unterschiedlicher Größe mit gleichmäßiger Verteilung koaxial um die zentrische Vertiefung 9 herum ausgebildet. Die zylindrischen Durchgangsabschnitte 11 liegen auf einer Kreislinie 14..

In dem der Befestigungsschraube zugeordneten, nicht gezeigten Stützfuß sind mehrere Eingriffsöffnungen mit unterschiedlichen gegenseitigen Abständen entlang einer Kreislinie mit gleichem Radius wie die Kreislinie 14 koaxial zu der für die Aufnahme des Schraubenbolzens 1 vorgesehenen Gewindebohrung ausgebildet. Die Abstände zwischen den Eingriffsöffnungen sind so bemessen, daß dann, wenn die Befestigungsschraube mit ihrem Schraubenbolzen 1 in die Gewindebohrung bis zur Anlage ihres Flansches 4 an die zugeordnete Befestigungsklaue eingeschraubt ist, wenigstens einer der zylindrischen Durchgangsabschnitte 11 und eine der Eingriffsöffnungen axial aufeinander ausgerichtet sind und ein Steckschloß 15 aufnehmen, welches ein Verdrehen der Spannschraube gegenüber dem Stützfuß verhindert.

Das Steckschloß 15 ist mit einem im größeren rechteckigen Durchgangsabschnitt 12 angeordneten Bart 16 und einem Verriegelungselement 17 versehen, das mittels eines nicht gezeigten Schlüssels von einer Verriegelungsstellung in eine Offenstellung und zurück verschwenkbar ist. In der Offenstellung ist das Verriegelungselement 17 diametral zum Bart 16 angeordnet und somit axial auf den kleineren Durchgangsabschnitt 13 ausgerichtet. In dieser Stellung kann das Steckschloß 15 aus der jeweiligen Durchgangsöffnung 10 herausgezogen und sodann die Befestigungsschraube fest- oder losgeschraubt werden. In der Verriegelungsstellung nimmt das Verriegelungselement 17, wie in Figur 2 gezeigt, eine gegenüber der diametralen Stellung abweichende Winkelstellung gegenüber dem Bart 16 ein, hintergreift auf diese Weise den Nutgrund 18 der ringförmig umlaufenden Nut 7 und verhindert ein Herausziehen des Steckschlosses 15 aus der Durchgangsöffnung 10 und der zugeordneten Eingriffsöffnung und damit ein Losschrauben der Befestigungsschraube.

Zum Verschließen der Durchgangsöffnungen 10 auf der Oberfläche 8 des Schraubenkopfes 2 ist ein Flachdeckel vorgesehen, der in seiner Deckelebene in eine Halterung des Schraubenkopfes 2 hinein- und aus ihr herausschiebbar ist. Der in Figur 3 gezeigte Deckel 19a weist in seinem mittleren Bereich einen Schriftzug 32 bestehend aus erhabenen oder vertieften Buchstaben und der Deckel 19b nach Figur 4 eine zentrisch angeordnete durchgehende Öffnung 33 auf.

Die Halterung ist an einer von der Oberfläche 8 des Schraubenkopfes 2 in dessen Randbereich senkrecht abstehenden Randleiste 20 ausgebildet, deren Innenperipherie 21 ebenso wie ein zugeordneter Bereich des Deckels 19 bzw. des Deckelrandes 22 sich entlang einem Kreisbogen 23 mit einem Zentriewinkel von 180° + 2 β mit β = 24° erstreckt. Der dem randleistenfreien Bereich des Schraubenkopfes 2 zugeordnete Bereich des Deckelrandes 22 verläuft im Anschluß an die freien Enden der Randleiste 20 über je einen Abschnitt 24 zunächst geradlinig bzw. mit leicht konkaver Krümmung, um dann einem Kreisbogen 25 zu folgen, der der Außenkontur 26 des Schraubenkopfes 2 entspricht. Diese Außenkontur bzw. Umfangsfläche 26 ist ebenso wie der entlang dem Kreisbogen 25 verlaufende Bereich des Deckelrandes 22 mit zueinander passenden, axial verlaufenden Griffmulden 27 versehen, die den jeweiligen Kreisbogenverlauf unterbrechen.

Jedes der beiden freien Randleisten-Endbereiche 28, deren Bogenlänge zum Zentriewinkel β gehört, ist elastisch bewegbar und stellt ein Klemmelement einer Klemmhalterung dar, dessen zugehöriger Flächenanteil an der Innenperipherie 21 zum kraftschlüssigen Eingriff mit der entsprechenden, sich entlang dem Kreisbogen mit dem Zentriewinkel β erstreckenden Bereich des Deckelrandes 22 vorgesehen ist. Der Randleistenbereich, dessen Bogenlänge zu einem Zentriewinkel < 180° gehört, bildet einen Anschlag für den in die Halterung bzw. in die Randleiste 20 eingeschobenen Deckel 19.

Zur formschlüssigen Halterung des Deckels 19 am Schraubenkopf 2 ist eine Nut/Federanordnung, 29,30 vorgesehen. Die Nut 29 ist über die Gesamtlänge der Randleiste 20 in deren Innenperipherie 21 ausgebildet. Da eine der Nutwandungen in einer Ebene mit der Oberfläche 8 des Schraubenkopfes 2 liegt, ist der Deckelrand 22 zur Bildung der Feder 30 abgestuft ausgebildet, wie dies in Figur 4 deutlich zu erkennen ist. Die Randleiste 20 ist durch einen nutartigen Einschnitt 31 in zwei Randleistenabschnitte etwa gleicher Länge geteilt.

Nach Einschrauben der Befestigungsschraube in die Gewindebohrung im Stützfuß und damit der Befestigung des Dachgepäckträgers am Kraftfahrzeug wird das in der bereits beschriebenen Weise in die axiale Durchgangsöffnung 10 eingesetzte und sodann verriegelte Steckschloß 15 durch Einschieben des Deckels 19 in die Halterung abgedeckt. Zu diesem Zweck wird der Deckel 19a bzw. 19b im Bereich zwischen dem Schriftzug 32 oder der durchgehenden Öffnung 33 und dem sich entlang dem Kreisbogen 25 erstreckenden, mit den Griffmulden 27 versehenen Bereich des Deckelrandes 22 erfaßt und mit dem den Griffmulden 27 gegenüberliegenden Deckelteil auf den randleistenfreien Teil des Schraubenkopfes 2 aufgesetzt und, wie mit dem die Figuren 2 und 3 verbindenden Pfeil 34 angedeutet, quer zur Axialrichtung der Durchgangsöffnungen 10 radial bis zum Anschlag in die Randleiste 20 eingeschoben. Die während des Einschiebens elastisch nach außen ausgewichenen Randleisten-Endbereiche oder Klemmelemente 28 liegen nunmehr mit ihren Klemmflächen kraftschlüssig an den zugehörigen Gegenflächen des Deckelrandes 22 an und verhindern ein unbeabsichtigtes Verschieben des Deckels in die mit dem Pfeil 35 angezeigte Gegenrichtung. Der als Anschlag dienende Teil der Randleiste 20 verhindert ein weiteres radiales Verschieben des Deckels 19 in Richtung des Pfeiles 34. Der Deckel 19a bzw. 19b ist ferner durch die Nut/Feder-Anordnung 29,30 in axialer Richtung in der Halterung und damit am Schraubenkopf 2 formschlüssig festgelegt. Verdrehungen des Deckels 19 um die Längsmittelachse 5 werden durch die geradlinig bzw. mit leichter konkaver Krümmung verlaufenden Abschnitte 24 des Deckelrandes 22 verhindert.

Zum Herausschieben des Deckels 19b aus der Halterung wird mit dem Daumen eine Kraft in Richtung des Pfeiles 35 auf den Teil der Peripherie der durchgehenden Öffnung 33 ausgeübt, der dem sich entlang dem Kreisbogen 25 erstreckenden, mit den Griffmulden 27 versehenen Bereich des Deckelrandes 22 zugewandt ist und eine axiale Angriffsfläche 36 darstellt. Das Herausschieben des Deckels 19b aus der Halterung erfolgt in gleicher Weise, jedoch wird die in Richtung des Pfeils 35 wirkende Kraft auf die axialen Angriffsflächen des Schriftzuges 32 ausgeübt. Alternativ oder zusätzlich kann durch den nutartigen Einschnitt 31 hindurch eine Kraft in Richtung des Pfeils auf den Deckelrand 22 ausgeübt werden.

## Patentansprüche

1. Schraubelement in Form einer Verschlußmutter oder eines Schraubenkopfes (2) von Befestigungsschrauben (1) zur Befestigung von insbesondere Dachgepäckträgern und dergl., mit wenigstens einem sich in Längsrichtung der Befestigungsschraube erstreckenden Durchgangsloch (10) zur Aufnahme eines Steckschlosses (15), Sicherungsstiftes oder dergl. und einem mittels einer Halterung am Schraubelement lösbar befestigten Deckel (19a, 19b) zum einseitigen Verschließen des Durchgangsloches (10), wobei die Halterung durch eine Steckfassung gebildet ist, in die der Deckel (19a, 19b) hineinschiebbar und aus ihr herausschiebbar und in der eingeschobenen Stellung gegen Herausfallen arretierbar ist,
dadurch gekennzeichnet,
daß bezüglich einer Radialebene, die die Öffnung des Durchgangslochs (10) enthält, die der Anlagefläche (6) des Schraubelements abgewandt ist, die Steckfassung auf der der Anlagefläche (6) abgewandten Seite der Radialebene angeordnet ist und der Deckel (19a, 19b) radial in die Halterung ein- und aus ihr herausschiebbar ist.

2. Schraubenelement nach Anspruch 1,
dadurch gekennzeichnet,
daß der Deckel (19a, 19b) als Flachdeckel ausgebildet ist.

3. Schraubelement nach einem der vorhergehenden Ansprüche,
dadurch gekennzeichnet,
daß der Deckel (19a, 19b) wenigstens eine Griffmulde (33) und/oder Grifferhöhung (32) aufweist.

4. Schraubelement nach Anspruch 3,
dadurch gekennzeichnet,
daß die Griffmulde (33) eine durchgehende Öffnung bzw. die Grifferhöhung (32) ein Schriftzug ist.

5. Schraubelement nach einem der vorhergehenden Ansprüche,
dadurch gekennzeichnet,
daß die Halterung eine Klemmhalterung zum Festlegen des Deckels (19a, 19b) in der Deckelebene umfaßt.

6. Schraubelement nach einem der vorhergehenden Ansprüche,
dadurch gekennzeichnet,
daß die Halterung eine Formschlußhalterung zum Festlegen des Deckels (19a, 19b) umfaßt.

7. Schraubelement nach Anspruch 5 oder 6,
dadurch gekennzeichnet,
daß die Größe des Deckels (19a, 19b) etwa an die Größe des Schraubelements angepaßt ist und die Elemente der Klemm- oder Formschlußhalterung am Umfangsrand des Schraubelements angeordnet sind.

8. Schraubelement nach einem der Ansprüche 5 bis 7,
dadurch gekennzeichnet,
daß die Klemm- oder Formschlußhalterung ein oder zwei elastisch nachgiebige Klemmelemente (28) mit einer Klemmfläche zum kraftschlüssigen Eingriff mit einer Gegenfläche am Deckelrand (22) umfaßt.

9. Schraubelement nach Anspruch 8,
dadurch gekennzeichnet,
daß das oder die Klemmelemente (28) zum Festlegen des Deckels (19a, 19b) in der Ausschubrichtung (35) wirksam sind und ein Anschlag am Schraubelement zum Festlegen des Deckels (19a, 19b) in der Einschubrichtung (34) vorgesehen ist.

10. Schraubelement nach Anspruch 9,
dadurch gekennzeichnet,
daß das oder die Klemmelemente (28) und der Anschlag an einer Randleiste (20) des Schraubelements (2) ausgebildet sind.

11. Schraubelement nach Anspruch 10,
dadurch gekennzeichnet,
daß der Deckel (19a, 19b) und das Schraubelement (2) einen im wesentlichen kreisrunden Querschnitt aufweisen und eine Randleiste (20) sich entlang einem Kreisbogen (23) mit einem Zentriewinkel von > 180° (180° + 2 β) erstreckt, wobei die beiden freien Randleisten-Endbereiche, deren jeweilige Bogenlänge zum Zentriewinkel gehören, je ein Klemmelement (28) bilden und der Anschlag von demjenigen Bereich der Randleiste (29) gebildet ist, dessen Bodenlänge zu einem Zentriewinkel von < 180° gehört.

12. Schraubelement nach Anspruch 11,
dadurch gekennzeichnet,
daß der Deckel (19a, 19b) angrenzend an die Klemmelemente (28) oder an die Enden der Randleiste (20) einen Ansatz (25) an seinem Umfang aufweist, der in der eingeschobenen Stellung des Deckels (19a, 19b) eine Drehsicherung für den Deckel (19a, 19b) bildet.

13. Schraubelement nach einem der Ansprüche 10 bis 12,
dadurch gekennzeichnet,
daß der dem randleistenfreien Bereich des Schraubelements zugeordnete Deckelrandabschnitt (24) im Bereich der freien Enden der Randleiste (20) mit geradlinigem oder leicht konkav gekrümmten Verlauf ausgebildet ist.

14. Schraubelement nach einem der Ansprüche 10 bis 13,
dadurch gekennzeichnet,
daß zumindest die Randleiste (20) und/oder das Schraubelement aus Kunststoff bestehen.

15. Schraubelement nach einem der Ansprüche 7 bis 14,
dadurch gekennzeichnet,
daß die Steckfassung eine Nut/Federanordnung (29, 30) umfaßt, die zumindest teilweise umlaufend an der Randleiste (20) und am Deckelrand (22) ausgebildet ist.

16. Schraubelement nach einem der Ansprüche 10 bis 15,
dadurch gekennzeichnet,
daß die Randleiste (20) durch einen nutartigen Einschnitt (31) in zwei Randleistenabschnitte etwa gleicher Länge geteilt ist.

## Claims

1. A screw element in the form of a lock nut or a screwhead (2) of set screws (1) for fastening, in particular roof luggage carriers and the like, having at least one through hole (10) extending in the longitudinal direction of the set screw for admission of a pin lock (15), locking pin or the like, and a detachable cover (19a, 19b), which is held onto the screw element by means of a mount, for sealing the through hole (10) on one side, the mount comprising a socket into and out of which the cover (19a, 19b) can be urged and, urged in, can be held against falling out,
characterized in that,
with respect to a radial plane, which contains the opening of the through hole (10), said opening facing away from the contact surface (6) of the screw element, the socket is arranged on the side of the radial plane which faces away from the contact surface (6), and the cover (19a, 19b) can be urged radially into or out of the mount.

2. Screw element as claimed in claim 1,
characterized in that
the cover (19a, 19b) is formed as a flat cover.

3. Screw element as claimed in any preceding claim,
characterized in that
the cover (19a, 19b) has at least one indentation and/or ridge for grasping (33,32).

4. Screw element as claimed in claim 3,
characterized in that
the grasping indentation (33) is a through-going opening or the grasping ridge (32) is print.

5. Screw element as claimed in any preceding claim,
characterized in that
the mount comprises a clamping mount for holding the cover (19a, 19b) in the plane of the cover.

6. Screw element as claimed in any preceding claim,
characterized in that
the mount comprises a form-locking mount for holding the cover (19a, 19b).

7. Screw element as claimed in claim 5 or 6,
characterized in that
the size of the cover (19a, 19b) is approximately matched to the size of the screw element, and the elements of the clamping mount or the form-locking mount are arranged on the peripheral rim of the screw element.

8. Screw element as claimed in any of claims 5 to 7,
characterized in that
the clamping mount or the form-locking mount comprises one or two elastically yielding clamping elements (28) with a clamping surface for force-locking engagement with an opposing surface on the cover rim (22).

9. Screw element as claimed in claim 8,
characterized in that
the one or more clamping elements (28) are effective in holding the cover (19a, 19b) in the slide-out direction (35) and a stop on the screw element is provided for holding the cover (19a, 19b) in the slide-in direction (34).

10. Screw element as claimed in claim 9,
characterized in that
the one or more clamping elements (28) and the stop are formed on an edge strip (20) of the screw element (2).

11. Screw element as claimed in claim 10,
characterized in that
the cover (19a, 19b) and the screw element (2) have a, for the most part, circular cross section and an edge strip (20) extends over a circular arc (23) with a center angle of > 180° (180° + 2 β), each of the two free end sections of the edge strip, whose respective arc lengths belong to the center angle, forming a clamping element (28), and the stop being formed by that section of the edge strip (29) whose arc length belongs to a center angle of < 180°.

12. Screw element as claimed in claim 11,
characterized in that
the cover (19a, 19b), adjoining on the clamping elements (28) or on the ends of the edge strip (20), has an extension (25) on its perimeter which serves as a safeguard against rotation of the cover (19a, 19b) when the cover (19a, 19b) is in its inserted position.

13. Screw element as claimed in any of claims 10 to 12,
characterized in that
the section of the cover rim (24) which is associated with the edge strip-free area of the screw element follows a straight path or has a slight concave curve in the area of the free ends of the edge strip (20).

14. Screw element as claimed in any of claims 10 to 13,
characterized in that
at least the edge strip (20) and/or the screw element is made of plastic.

15. Screw element as claimed in any of claims 7 to 14,
characterized in that
the socket contains a slot and feather arrangement (29, 30) which runs at least in part around the edge strip (20) and the rim of the cover (22).

16. Screw element as claimed in any of claims 10 to 15,
characterized in that
the edge strip (20) is divided into two edge strip sections, of approximately equal length, by a groove-like cut (31).

## Revendications

1. Elément fileté se présentant sous la forme d'un bouchon fileté ou d'une tête (2) de vis de fixation (1) destiné à la fixation notamment de galeries porte-bagages et analogues, comportant au moins un trou débouchant (10) qui s'étend dans la direction longitudinale de la vis de fixation et est destiné à recevoir une serrure enfichable (15), un pion de blocage ou analogue et un couvercle (19a, 19b) qui est fixé de manière démontable à l'aide d'un moyen de retenue sur l'élément fileté, le moyen de retenue étant constitué par une griffe de fixation dans laquelle et hors de laquelle on peut glisser le couvercle (19a, 19b) qui, en position engagée, est tenu de manière à ce qu'il ne puisse pas tomber, caractérisé par le fait que, par rapport à un plan radial qui contient l'orifice du trou débouchant (10) éloigné de la surface d'appui (6) de l'élément fileté, la griffe de fixation est disposée du côté du plan radial éloigné de la surface d'appui (6) et le couvercle (19a, 19b) peut être glissé radialement dans et hors de la griffe de fixation.

2. Elément fileté selon la revendication 1, caractérisé par le fait que le couvercle (19a, 19b) est agencé sous forme de couvercle plat.

3. Elément fileté selon l'une des revendications précédentes, caractérisé par le fait que le couvercle (19a, 19b) présente au moins une cavité de préhension (33) et/ou une saillie de préhension (32).

4. Elément fileté selon la revendication 3, caractérisé par le fait que la cavité de préhension (33) est une ouverture continue et que la saillie de préhension (32) est une inscription.

5. Elément fileté selon l'une des revendications précédentes, caractérisé par le fait que le moyen de retenue comprend, dans le plan du couvercle, un moyen de retenue par serrage pour fixer le couvercle (19a, 19b).

6. Elément fileté selon l'une des revendications précédentes, caractérisé par le fait que le moyen de retenue comprend un moyen de retenue par complémentarité de formes pour fixer le couvercle (19a, 19b).

7. Elément fileté selon la revendication 5 ou 6, caractérisé par le fait que la taille du couvercle (19a, 19b) est sensiblement adaptée à la taille de l'élément fileté et les éléments du moyen de retenue par serrage ou par complémentarité de formes sont disposés sur le pourtour de l'élément fileté.

8. Elément fileté selon l'une des revendications 5 à 7, caractérisé par le fait que les moyens de retenue par serrage ou par complémentarité de formes comprennent un ou deux éléments de serrage (28) élastiques avec une surface de serrage destinée à coopérer par adhérence avec une surface conjuguée sur le bord (22) du couvercle.

9. Elément fileté selon la revendication, caractérisé par le fait que le ou les éléments de serrage (28) destinés à la fixation du couvercle (19a, 19b) sont actifs dans le sens de la sortie (35) et par le fait qu'il est prévu sur l'élément fileté une butée destinée à bloquer le couvercle (19a, 19b) dans dans le sens de l'introduction (34).

10. Elément fileté selon la revendication 9, caractérisé par le fait que le ou les éléments de serrage (28) et la butée sont agencés sur un rebord (20) de l'élément fileté (2).

11. Elément fileté selon la revendication 10, caractérisé par le fait que le couvercle (19a, 19b) et l'élément fileté (2) présentent une section sensiblement circulaire, par le fait qu'un rebord (20) s'étend suivant un arc de cercle (23) avec un angle au centre > 180° (180° + 2 β), les deux zones terminales libres du rebord dont l'arc fait partie de l'angle au centre formant chacune un élément de serrage (28) et par le fait que la butée est constituée par la partie du rebord (29) dont l'arc fait partie d'un angle au centre < 180°.

12. Elément fileté selon la revendication 11, caractérisé par le fait que le couvercle (19a, 19b) présente sur son pourtour, au voisinage des éléments de serrage (28) ou aux extrémités du rebord (20) un talon (25) qui, lorsque le couvercle (19a, 19b) est inséré, constitue une sécurité en rotation pour celui-ci (19a, 19b).

13. Elément fileté selon l'une des revendications 10 à 12, caractérisé par le fait que la partie (24) du bord du couvercle associée à la partie sans rebord de l'élément fileté, dans la région des extrémités libres du rebord (20) est rectiligne ou présente une courbure concave légère.

14. Elément fileté selon l'une des revendications 10 à 13, caractérisé par le fait qu'au moins le rebord (20) et/ou l'élément fileté sont en matière plastique.

15. Elément fileté selon l'une des revendications 7 à 14, caractérisé par le fait que la griffe de fixation comprend un système rainure/languette (29, 30) qui est agencé sur une partie au moins du rebord (20) et du bord de couvercle (22).

16. Elément fileté selon l'une des revendications 10 à 15, caractérisé par le fait que le rebord (20) est divisé en deux parties de rebord sensiblement de même longueur par une encoche (31) en forme de rainure.
